# EUROPEAN PATENT APPLICATION

(11) **EP 4 331 964 A1**
(43) Date of publication of application: **06.03.2024**
(21) Application number: 22795526.7
(22) Date of filing: 31.03.2022
(51) Int. Cl.: B62M 6/65, H02K 7/116, H02K 7/14

(54) **HUB AND ELECTRIC VEHICLE**

(30) Priority: 28.04.2021 JP 2021076374
(71) Applicant: Nidec Corporation, Minami-ku, Kyoto-shi, Kyoto 601-8205 (JP)
(72) Inventor: MIZUIKE Kosuke, Kyoto-shi, Kyoto 601-8205 (JP); NAGASAWA Naohiro, Kyoto-shi, Kyoto 601-8205 (JP); OYAMA Seiichi, Kyoto-shi, Kyoto 601-8205 (JP); TAKEDA Kazuya, Kyoto-shi, Kyoto 601-8205 (JP)
(74) Representative: Viering, Jentschura & Partner mbB Patent- und Rechtsanwälte
(86) International application number: PCT/JP2022/016729
(87) International publication number: WO 2022/230610

(57) **Abstract**

A hub arranged at a center of a wheel includes a hub shaft extending along a central axis, a hub body rotatably arranged on the hub shaft, a stator having a coil, a rotor having a rotor shaft extending along the central axis, and a lead wire electrically connected to a conductive wire. The rotor shaft is connected to the hub body. The hub shaft has a through hole penetrating from an end part on the axial other side to the outer peripheral surface. The through hole has a first opening part formed on an outer peripheral surface of the hub shaft. The lead wire is arranged in the through hole. An end part on an axial one side of the first opening part and an end part on an axial other side of the first opening part have different circumferential positions with respect to the central axis.

## Description

### TECHNICAL FIELD

The present invention relates to a hub arranged at a center of a wheel of an electric vehicle and an electric vehicle including the hub.

### BACKGROUND ART

A known hub includes a rotor and a stator having a coil. This type of hub has wiring connected to the coil. The hub has a hub shaft, and a wiring passage opened at a tip end is formed in the hub shaft. The wiring is drawn outward from an end part of the hub shaft to the outside through the wiring passage.

### CITATIONS LIST

### PATENT LITERATURE

Patent Literature 1: JP 2005-75106 A

### SUMMARY OF INVENTION

### TECHNICAL PROBLEMS

In the hub described above, it is necessary to pass the wiring through the wiring passage formed along the hub shaft, and there is a possibility that attachment of the wiring becomes difficult. In a case of the configuration where the wiring is drawn out from the end part of the hub shaft, the path of the wiring becomes long.

An object of the present invention is to supply a hub to which a lead wire can be easily mounted.

### SOLUTIONS TO PROBLEMS

An exemplary hub of the present invention is arranged in the center of a wheel. A hub includes: a hub shaft extending along a central axis and protruding outward on an axial one side; a hub body having a tubular shape rotatably arranged on the hub shaft and extending axially; a stator including a coil formed by winding a conductive wire and arranged inside the hub body; a rotor including a rotor shaft extending along the central axis, radially or axially facing the stator, and arranged rotatably with respect to the stator; and a lead wire electrically connected to the conductive wire. The rotor shaft is connected to the hub body. The hub shaft has a through hole penetrating from an end part on an axial other side to an outer peripheral surface. The through hole has a first opening part formed on the outer peripheral surface of the hub shaft, and the lead wire is arranged in the through hole. An end part on an axial one side of the first opening part and an end part on an axial other side of the first opening part have different circumferential positions with respect to the central axis.

### ADVANTAGEOUS EFFECTS OF INVENTION

To an exemplary hub of the present invention, the lead wire can be easily mounted.

### BRIEF DESCRIPTION OF DRAWINGS

FIG. 1 is a schematic view of an electric vehicle according to an embodiment of the present invention.
FIG. 2 is a perspective view of a hub attached to a front fork.
FIG. 3 is a cross-sectional view of the hub cut with a vertical plane and viewed from the front.
FIG. 4 is a perspective view of a right hub shaft viewed from the front lower side.
FIG. 5 is a perspective view of the right hub shaft from which a lead wire is removed viewed from the front lower side.
FIG. 6 is a bottom view of the right hub shaft.
FIG. 7 is a rear view of the right hub shaft.
FIG. 8 is a view of the right hub shaft viewed from the right side in a direction along the central axis.
FIG. 9 is a view of the right hub shaft viewed from the left side in a direction along the central axis.
FIG. 10 is a perspective view of a right hub shaft of a first variation viewed from a front lower side.
FIG. 11 is a view of the right hub shaft viewed from the right side in a direction along the central axis.

### DESCRIPTION OF EMBODIMENT

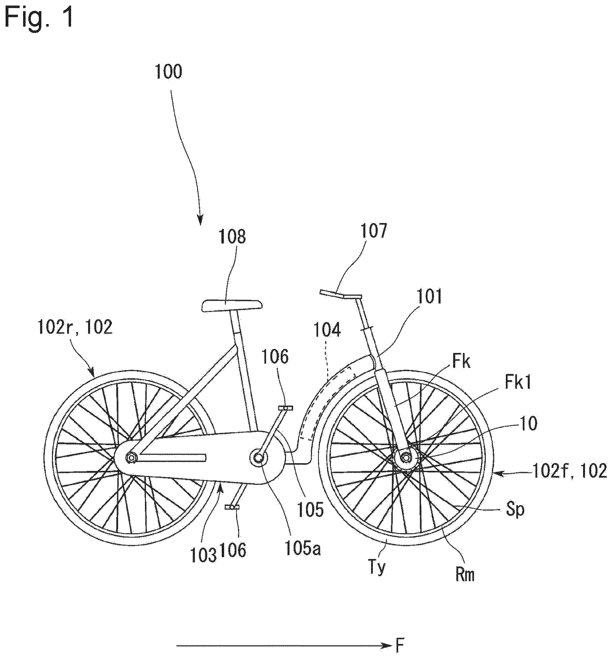

An exemplary embodiment of the present invention will be described below in detail with reference to the accompanying drawings. In the present description, in the description of a hub 10, a direction parallel to a central axis J1 of the hub 10 illustrated in FIG. 1 is referred to as "axial". A direction orthogonal to the central axis of each rotatable shaft is referred to as "radial", and a direction along an arc centered on the central axis is referred to as "circumferential". With reference to a state where the hub 10 is attached to an electric vehicle 100, a traveling direction of the electric vehicle 100 is "front F". In a direction along the central axis J1 about the hub 10, one side is defined as right R, and the other side is defined as left L. Note that directions in the following description are defined for ease of description, and there is a case where they do not coincide with directions of the hub 10 actually used.

FIG. 1 is a schematic view of an electric vehicle according to an embodiment of the present invention. In the present embodiment, the electric vehicle 100 is a power assisted bicycle that assists the user's force of stepping on pedals 106. As illustrated in FIG. 1, the electric vehicle 100 includes a vehicle body 101, two wheels 102, a power transmission mechanism 103, and a power supply unit 104.

The vehicle body 101 includes a handlebar 107 and a saddle 108. The two wheels 102, the power transmission mechanism 103, and the power supply unit 104 are attached to the vehicle body 101. The two wheels 102 are respectively attached to a front part of the vehicle body 101 as a front wheel 102f and a rear part as a rear wheel 102r. The power transmission mechanism 103 is connected to the rear wheel 102r. The hub 10 is arranged at the center of the front wheel 102f.

The power transmission mechanism 103 includes a crank 105 attached to a crankshaft 105a and the pedals 106. The power transmission mechanism 103 further includes a driving gear, a driven gear attached to the rear wheel 102r, and a chain (all not illustrated) coupling the driving gear and the driven gear. The crank 105 is fixed to the crankshaft 105a rotatably attached to the vehicle body 101. Furthermore, the pedals 106 are rotatably attached to the tip ends of the crank 105.

The power supply unit 104 is attached to the vehicle body 101. The power supply unit 104 is, for example, a battery, and is built in the vehicle body 101 as illustrated in FIG. 1. However, the power supply unit 104 is not limited to this, and can be widely adopted with a configuration that can be attached to the vehicle body 101 to supply electric power to the hub 10.

In the electric vehicle 100, torque is applied to the crankshaft 105a when the user seated on the saddle 108 steps on the pedals 106. The torque applied to the crankshaft 105a is transmitted to the rear wheel 102r via the power transmission mechanism 103. The transmitted torque rotates the rear wheel 102r, and the electric vehicle 100 travels.

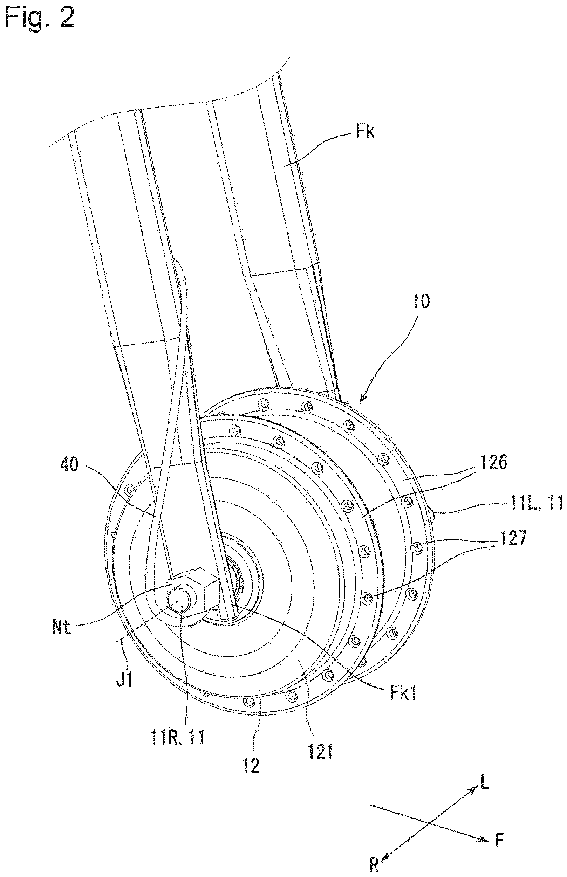

In the electric vehicle 100, the hub 10 is attached to a lower end part of a front fork Fk, which is a part of the vehicle body 101 (see FIG. 2 described later). The front fork Fk has a hub attachment part Fk1 having a recess shape downwardly opening at the lower end. In the hub 10, a second shaft part 112 of a hub shaft 11 described later protruding to both left and right ends is arranged in the hub attachment part Fk1. Then, a nut Nt is attached to and fastened to a male screw (not illustrated) formed on the outer peripheral surface of the second shaft part 112. Due to this, the hub 10 is attached to the front fork Fk (see FIG. 2 described later).

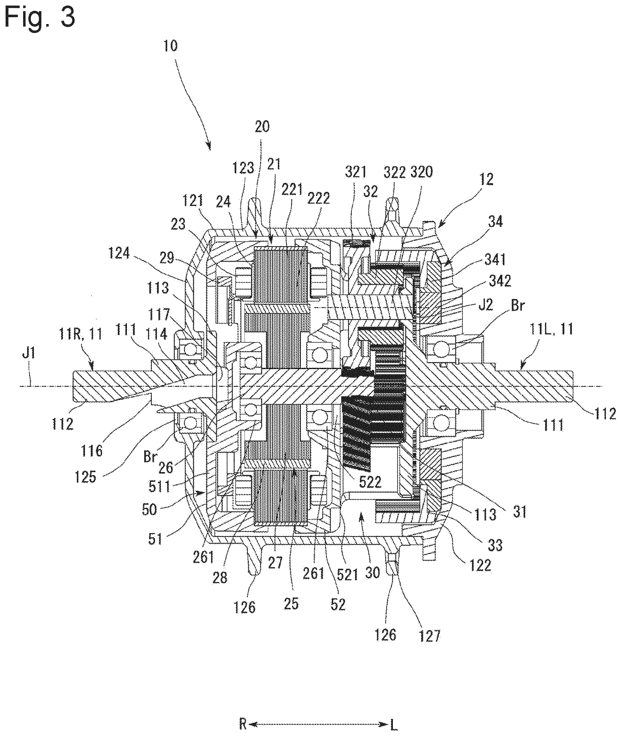

FIG. 2 is a perspective view of the hub 10 attached to the front fork Fk. FIG. 3 is a cross-sectional view of the hub 10 cut with a vertical plane and viewed from the front F.

The hub 10 is arranged at the center of the front wheel 102f, and is connected to a rim Rm (see FIG. 1) having an annular shape included in the front wheel 102f via a spoke Sp (see FIG. 1). When the hub 10 is supplied with electric power, a motor portion 20 accommodated internally is driven. The front wheel 102f is driven by the torque of the motor portion 20. That is, in the present embodiment, the hub 10 is a drive device of the electric vehicle 100.

The hub 10 may be arranged on not only the front wheel 102f but also the rear wheel 102r, or may be arranged on both the front wheel 102f and the rear wheel 102r. That is, the hub 10 is arranged at the center of the wheels 102.

The hub 10 includes the hub shaft 11, a hub body 12, the motor portion 20, and a speed reduction mechanism 30. In the hub 10, the hub shaft 11 protrudes to the right R and the left L in the axial direction.

The motor portion 20 is a direct-current brushless motor. The motor portion 20 is driven by electric power from the power supply unit 104. The motor portion 20 includes a stator 21 and a rotor 25. Parts of the stator 21 and the rotor 25 are arranged inside a housing 50. The motor portion 20 is an inner rotor type motor in which the rotor 25 is arranged radially inward of the stator 21. Note that the motor portion 20 is not limited to the inner rotor type motor, and the motor portion 20 may be an outer rotor type motor. The motor portion 20 may be what is called an axial gap motor in which the stator and the rotor are arranged to axially face each other.

The stator 21 includes a stator core 22, a coil 23, and an insulator 24. The stator 21 is held by the housing 50. The stator core 22 includes a core back 221 and a plurality of teeth 222. The core back 221 has an annular shape. The radially outer surface of the core back 221 is fixed to the housing 50. The teeth 222 protrude from the radially inner surface of the core back 221 in a direction approaching the central axis J1. The plurality of teeth 222 are arranged at equal intervals in the circumferential direction. The insulator 24 covers at least the teeth 222. The insulator 24 has an insulating property. The coil 23 is formed by winding a conductive wire around the teeth 222 covered with the insulator 24. That is, the stator 21 includes the coil 23 formed by winding the conductive wire.

The rotor 25 includes a rotor shaft 26, a rotor core 27, and a rotor magnet 28. The rotor shaft 26 has a substantially columnar shape. As illustrated in FIG. 3, the rotor shaft 26 extends along the central axis J1. That is, the motor portion 20 has the rotor shaft 26 extending along the central axis J1, and has the rotor 25 radially facing the stator 21 and rotatably arranged with respect to the stator 21. The rotor shaft 26 is rotatable about the central axis J1.

The rotor shaft 26 is rotatably supported by the housing 50 via a shaft bearing 261. The shaft bearing 261 is arranged at axially separated two places, and rotatably supports axially separated two places of the rotor shaft 26. The shaft bearing 261 is a ball bearing here, but is not limited to this. A bearing structure that can smoothly and accurately support the rotor shaft 26 can be widely adopted.

The rotor 25 is fixed to the outer periphery of the rotor shaft 26. The rotor 25 includes the rotor core 27 and the rotor magnet 28. The rotor 25 rotates about the central axis J1 extending in the horizontal direction.

The rotor core 27 is formed by stacking thin plate-like electromagnetic steel plates. The rotor core 27 is a columnar body extending along the axial direction. Note that the rotor core 27 may be formed by sintering a magnetic powder. A plurality of the rotor magnets 28 are fixed to the rotor core 27. The plurality of rotor magnets 28 are arranged side by side along the circumferential direction with magnetic poles alternated.

As illustrated in FIGS. 2 and 3, the housing 50 has a cylindrical shape. The housing 50 includes a first housing part 51 and a second housing part 52. The first housing part 51 has a bottomed tubular shape having a bottom part 511 on the right R in the axial direction, and has an opening on the left L. In other words, the first housing part 51 has the opening toward the left L. The second housing part 52 has a bottomed tubular shape having a bottom part 521 on the left L in the axial direction, and has an opening on the right R. In other words, the second housing part 52 has the opening toward the right R.

The opening of the first housing part 51 holds an axially right end part of the stator 21. The opening of the second housing part 52 holds an axially left end part of the stator 21. The first housing part 51 and the second housing part 52 are arranged axially apart. More specifically, the first housing part 51 and the second housing part 52 are attached to the stator 21 axially apart.

Describing more specifically, the rotor shaft 26 is rotatably supported by the bottom part 511 of the first housing part 51 and the bottom part 521 of the second housing part 52 via the shaft bearing 261. The end part on the left L in the axial direction of the rotor shaft 26 penetrates a through hole 522 formed in the bottom part 521 of the second housing part 52. A sun gear portion 31 described later of the speed reduction mechanism 30 is arranged in a part protruding toward the left L relative to the bottom part 521 of the second housing part 52 of the rotor shaft 26.

Auxiliary equipment such as a busbar 29 is attached to an end part on the right R of the motor portion 20. The busbar 29 is a conductive member to which the conductive wire of the coil 23 is connected. A lead wire 40 is connected to the busbar 29. The coil 23 is supplied with a current from the power supply unit 104 via the lead wire 40 and the busbar 29. That is, the lead wire 40 is electrically connected to the conductive wire of the coil 23.

The motor portion 20 is driven by electric power supplied from the power supply unit 104. That is, the current supplied from the power supply unit 104 is supplied to the coil 23, thereby exciting the coil 23. When the coil 23 is excited, a magnetic force is generated between the rotor magnet 28 of the rotor 25 and the coil 23. By exciting a plurality of the coils 23 at an appropriate timing, torque in the circumferential direction about the central axis J1 is generated in the rotor 25. This torque rotates the rotor shaft 26 about the central axis J1.

As illustrated in FIG. 3, the speed reduction mechanism 30 includes the sun gear portion 31, a planetary gear portion 32, an internal gear portion 33, and a torque limiter 34. Using what is called a planetary gear mechanism, the speed reduction mechanism 30 decelerates and transmits, to the hub body 12, the rotation of the rotor shaft 26.

As illustrated in FIGS. 3 to 5, the sun gear portion 31 is arranged at an end part of the left L in the axial direction of the rotor shaft 26. The sun gear portion 31 rotates integrally with the rotor shaft 26. Therefore, the sun gear portion 31 may be formed of a single member with the rotor shaft 26, or may be mounted to the rotor shaft 26 and fixed by a fixing method such as adhesion, welding, screwing, caulking, or press fitting. A fixing method other than these may be adopted. In addition to these, it is possible to widely adopt a fixing method that can integrally rotatably fix the sun gear portion 31 to the rotor shaft 26.

As illustrated in FIG. 3, the speed reduction mechanism 30 includes a plurality of the planetary gear portions 32. The number of the planetary gear portions 32 can be three or four, but is not limited to this. The plurality of planetary gear portions 32 are arrayed circumferentially. The plurality of planetary gear portions 32 are arranged side by side at equal intervals in the circumferential direction. The planetary gear portions 32 engage with the sun gear portion 31. Although the speed reduction mechanism 30 of the present embodiment includes three planetary gear portions 32, the number of planetary gear portions is not limited to three. Two or more planetary gear portions 32 may be provided. The circumferential array of the planetary gear portions 32 is not limited to equal intervals. That is, the plurality of planetary gear portions 32 engage with the sun gear portion 31 and are arrayed circumferentially.

The planetary gear portion 32 will be further described. The planetary gear portion 32 includes a first planetary gear 321 and a second planetary gear 322. More specifically, the planetary gear portion 32 includes a planetary shaft 320, the first planetary gear 321, and the second planetary gear 322. The planetary shaft 320 extends along a planetary axis J2 parallel to the central axis J1. As illustrated in FIG. 3, a right end part in the axial direction of the planetary shaft 320 is fixed to the bottom part 521 of the second housing part 52. An upper end part of the planetary shaft 320 is fixed to a left hub shaft 11L. That is, the position of the planetary axis J2 of the planetary gear portion 32 with respect to the central axis J1 is fixed.

The first planetary gear 321 and the second planetary gear 322 are rotatably supported by the planetary shaft 320. The first planetary gear 321 and the second planetary gear 322 are coupled in the axial direction. The second planetary gear 322 rotates integrally with the first planetary gear 321. That is, the planetary gear portion 32 is a two-stage gear. However, the planetary gear portion 32 is not limited to the two-stage gear. The planetary gear portion 32 may be a multistage gear having three or more stages, or may have a single diameter, that is, a configuration including only a gear having a predetermined number of teeth. The first planetary gear 321 and the second planetary gear 322 may be formed of a single member, or may be fixed by using a fixing method such as adhesion, welding, or screwing in combination in the axial direction.

The internal gear portion 33 is an annular gear. Internal teeth are formed on the radially inner surface. The internal gear portion 33 engages with the second planetary gear 322 of the planetary gear portion 32. The internal gear portion 33 has a tubular shape, and the torque limiter 34 is arranged at an end part on the left L in the axial direction. The torque limiter 34 comes into contact with the inner peripheral surface of the internal gear portion 33.

The torque limiter 34 includes a torque limiter outer ring 341 and a torque limiter inner ring 342. The torque limiter outer ring 341 rotates integrally with the internal gear portion 33 about the central axis J1. The torque limiter inner ring 342 rotates integrally with a hub body lid part 122 of the hub body 12. In the torque limiter 34, when the torque limiter inner ring 342 is rotated in a rotation direction Rt of the front wheel 102f, the rotation of the torque limiter outer ring 341 is transmitted to the torque limiter inner ring 342.

Note that the hub 10 of the present embodiment adopts the planetary gear mechanism as the speed reduction mechanism 30, but the present invention is not limited to this. It is possible to widely adopt a configuration that can decelerate rotation of the motor portion 20. The rotor shaft 26 of the motor portion 20 may be connected to the hub body 12 directly or via the torque limiter. The rotor shaft 26 is directly or indirectly connected to the hub body 12. That is, the rotor shaft 26 is connected to the hub body 12.

The hub 10 includes two hub shafts 11. In the following description, as necessary, the hub shaft 11 on the right R is referred to as a right hub shaft 11R and the hub shaft 11 on the left is referred to as the left hub shaft 11L. The center of each of the hub shafts 11 overlaps the central axis J1. That is, the hub shaft 11R extends along the central axis J1, and an axial one side protrudes outward.

First, a common structure of the right hub shaft 11R and the left hub shaft 11L will be described.
The hub shaft 11 includes a first shaft part 111, the second shaft part 112, and a flange part 113. The first shaft part 111 has a columnar shape centered on the central axis J1 and extends along the central axis J1. That is, the hub shaft 11R has the first shaft part 111 having the columnar shape extending along the central axis J1.

The second shaft part 112 has a columnar shape centered on the central axis J1. The outer diameter of the second shaft part 112 is smaller than the outer diameter of the first shaft part 111. The second shaft part 112 extends along the central axis J1 from one side in the direction along the central axis J1 of the first shaft part 111, that is, an outer end surface along the central axis J1 in FIG. 3. That is, the hub shaft 11R includes the second shaft part 112 having a columnar shape protruding in the direction along the central axis J1 from the end part on the axial one side of the first shaft part 111 and having a smaller diameter than that of the first shaft part 111. A male screw not illustrated is formed on the outer peripheral surface of the second shaft part 112.

The flange part 113 expands on the other side in the direction along the central axis J1 of the first shaft part 111, that is, radially outward from the outer peripheral surface on the outside along the central axis J1 in FIG. 3. The flange part 113 has an annular shape. The motor portion 20 is fixed to the flange part 113.

Both the right hub shaft 11R and the left hub shaft 11L have the above-described configuration. The right hub shaft 11R and the left hub shaft 11L are integrally molded, but are not limited to this, and may be partially formed separately. For example, the second shaft part 112 may be formed in a tubular shape, and the first shaft part 111 may be fixed by a fixing method such as press fitting. Other configurations may be employed. In the hub 10, the center of each of the right hub shaft 11R and the left hub shaft 11L coincides with the central axis J1. In other words, the right hub shaft 11R and the left hub shaft 11L have the same central axis J1 and are arranged apart in the central axis J1 direction.

The flange part 13 of the right hub shaft 11R is fixed to the bottom part 511 of the first housing part 51. The flange part 13 of the left hub shaft 11L is fixed to the bottom part 521 of the second housing part 52 via the planetary shaft 320. Due to this, the stator 21 of the motor portion 20 is fixed to the hub shaft 11.

Next, a configuration included only in the right hub shaft 11R will be described. The hub 10 includes the lead wire 40 connecting the motor portion 20 accommodated internally and a control unit not illustrated arranged externally. As illustrated in FIG. 3, in the hub 10, the lead wire 40 is drawn outward from the right side of the hub 10, that is, the right hub shaft 11R. The hub 10 of the present embodiment has a configuration where the lead wire 40 is drawn out from the right side, but the present invention is not limited to this, and the hub 10 may have a configuration where the lead wire is drawn out from the left side. In this case, the right hub shaft 11R and the left hub shaft 11L are exchanged.

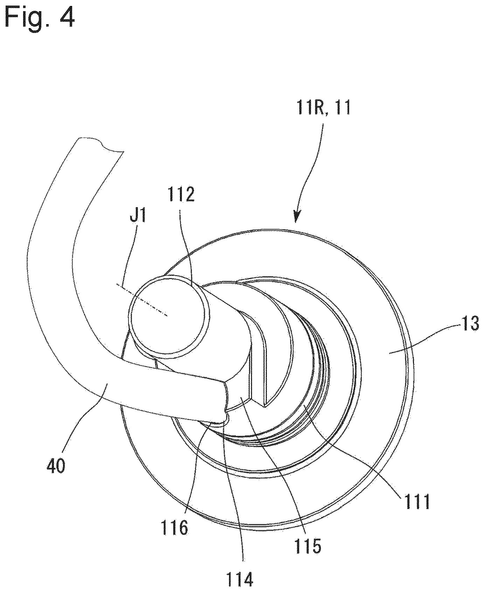

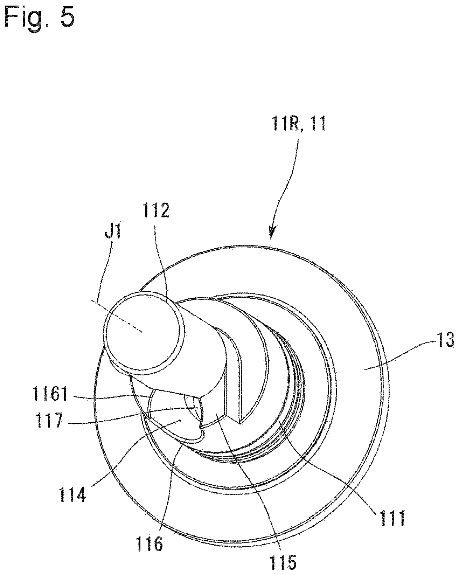

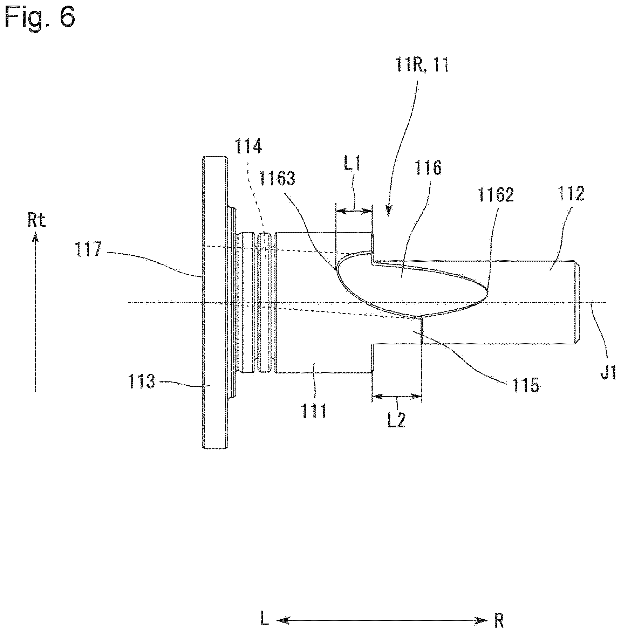

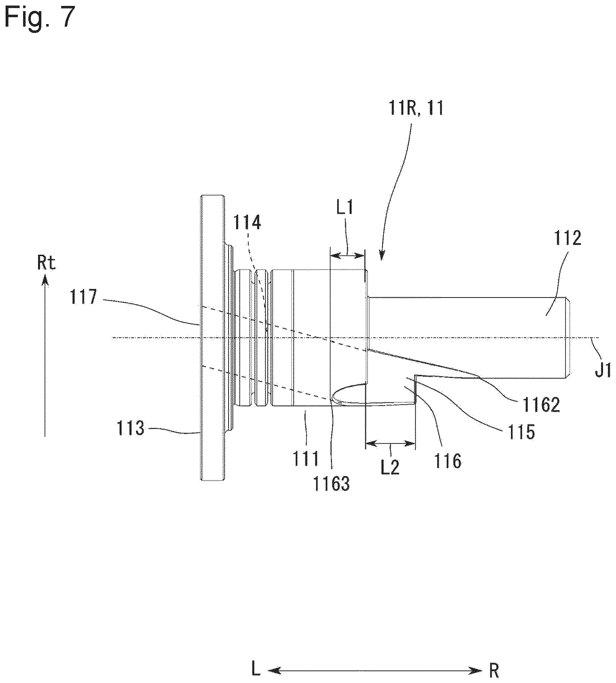

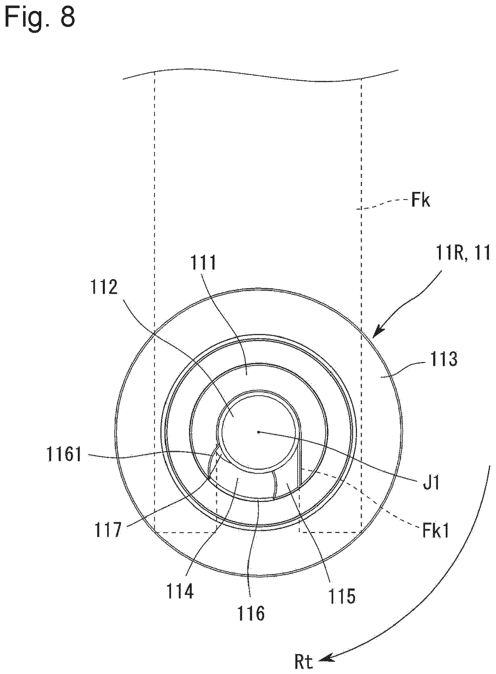

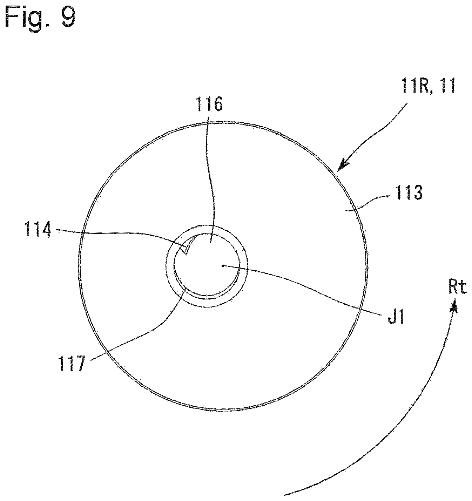

FIG. 4 is a perspective view of the right hub shaft 11R viewed from the front lower side. FIG. 5 is a perspective view of the right hub shaft 11R from which the lead wire is removed viewed from the front lower side. FIG. 6 is a bottom view of the right hub shaft 11R. FIG. 7 is a rear view of the right hub shaft 11R. FIG. 8 is a view of the right hub shaft 11R viewed from the right side in the direction along the central axis J1. FIG. 9 is a view of the right hub shaft 11R viewed from the left side in the direction along the central axis J1. In FIG. 8, a part of the front fork Fk is indicated by a one dot chain line.

As illustrated in FIGS. 5 to 7 and the like, the right hub shaft 11R includes a through hole 114 and a first protrusion part 115. The first protrusion part 115 protrudes rightward from the right end part of the first shaft part 111. As illustrated in FIG. 5, the first protrusion part 115 is connected to the outer peripheral surface of the second shaft part 112. That is, the first protrusion part 115 axially protrudes from the end part on the axial one side of the first shaft part 111 and is arranged on the radially outer peripheral side of the second shaft part 112. The first protrusion part 115 according to the present embodiment is formed of a single member with both the first shaft part 111 and the second shaft part 112. Note that the first protrusion part 115 may be formed separately from the first shaft part 111 or the second shaft part 112 and fixed by a fixing method such as welding or screwing.

The through hole 114 penetrates from an end part on the left side in the direction along the central axis J1 of the right hub shaft 11R toward the outer peripheral surface. That is, the hub shaft 11R has the through hole 114 penetrating from an end part on the axial other side to the outer peripheral surface. In the hub 10, the lead wire 40 is arranged in the through hole 114.

Both ends of the through hole 114 have a first opening part 116 and a second opening part 117 at both ends respectively in the axial direction. That is, the through hole 114 has the first opening part 116 formed on the outer peripheral surface of the hub shaft 11R.

As illustrated in FIGS. 5 to 7, the first opening part 116 is formed on the outer peripheral surface of the first shaft part 111, a right end surface along the central axis J1, and the outer peripheral surface of the second shaft part 112. That is, a part of the first opening part 116 is formed on the outer peripheral surface of the first shaft part 111, the outer peripheral surface of the second shaft part 112, and the outer surface of the first protrusion part 115.

Since the right hub shaft 11R has the first protrusion part 115, the rigidity of the right hub shaft 11R can be increased. Since the first protrusion part 115 is attached in contact with the front fork Fk, positional displacement of the hub 10 with respect to the front fork Fk can be suppressed. Since the first opening part 116 is formed in the first protrusion part 115, the through hole 114 can be lengthened, and the lead wire 40 can be stably held.

As illustrated in FIG. 6, an end part 1162 on the right R and an end part 1163 on the left L in the direction along the central axis J1 of the first opening part 116 have different circumferential positions. That is, the end part 1162 on an axial one side of the first opening part 116 and the end part 1163 on the axial other side have different circumferential positions with respect to the central axis J1.

Such configuration enables the first opening part 116 to be formed larger than that in a case where the opening through which the lead wire 40 is drawn is formed along the axial direction. This makes drawing of the lead wire 40 easy. Since the movable range of the lead wire 40 increases with an increase of the first opening part 116, routing of the lead wire 40 drawn out becomes easy. From the above, the hub 10 can be attached to the front forks Fk having different shapes.

As illustrated in FIG. 8, the first protrusion part 115 is arranged rearward the first opening part 116 in the rotation direction Rt of the wheel 102f. In the hub 10, the hub body 12 rotates in the rotation direction Rt by the torque output from the motor portion 20. At this time, a reaction force in an orientation opposite to the rotation direction Rt acts on the right hub shaft 11R.

At this time, the first protrusion part 115 of the right hub shaft 11R is pressed against the hub attachment part Fk1 of the front fork Fk. Since the right hub shaft 11R has the first protrusion part 115, the rigidity of the part of the right hub shaft 11R in contact with the hub attachment part Fk1 can be increased. This enables a reaction force when the wheel 102f rotates to be received, and the right hub shaft 11R to be firmly fixed to the front fork Fk.

Describing more specifically, as illustrated in FIG. 8, a part of the first opening part 116 is formed at an end part on the axial one side of the first shaft part 111, and a part of the first opening part 116 formed in the first shaft part 111 has a curve part 1161 whose peripheral edge is curved outward. With the curve part 1161 as described above, the lead wire 40 is less likely to be damaged when the lead wire 40 comes into contact with the curve part 1161 of the first opening part 116.

The through hole 114 includes the first opening part 116 and the second opening part 117 at both ends, respectively. The second opening part 117 is formed at an end part on the left L in the axial direction of the flange part 113. That is, the through hole 114 includes the second opening part 117 opening to the axial other side of the hub shaft 11R.

As illustrated in FIG. 8, the first opening part 116 has a part axially overlapping the second opening part 117 as viewed from the direction along the central axis J1. This configuration allows the lead wire 40 to be checked and wired when the lead wire 40 is wired to the through hole 114. Therefore, the lead wire 40 can be reliably wired to through hole 114.

As illustrated in FIG. 9, the second opening part 117 is arranged biasedly in the radial direction with respect to the central axis J1. In other words, the positions of the center of the second opening part 11 and the central axis J1 are different as viewed from the central axis J1 direction. This configuration makes it easy to connect the lead wire 40 to the busbar 29 connecting the lead wire 40 to the coil 23 arranged radially outward of the rotor shaft 26. This makes manufacturing of the hub 10 easy.

A part of the first opening part 116 is formed on the outer peripheral surface of the first shaft part 111. A length L1 from the end part on the axial one side to the end part on the axial other side of the first opening part 116 formed on the outer peripheral surface of the first shaft part 111 may be shorter than an axial length L2 of the first protrusion part 115.

It is possible to lengthen the guide of the lead wire 40 by lengthening the axial length L2 of the first protrusion part 115. This enables the lead wire 40 to be stably wired along the right hub shaft 11R.

The hub body 12 is rotatably supported by the hub shaft 11 via a hub bearing Br. The hub body 12 is rotatably arranged on the hub shaft 11 and has a tubular shape extending in the axial direction. The hub body 12 includes a case part 121 and the hub body lid part 122. The case part 121 has a bottomed tubular shape extending along the central axis J1.

The case part 121 includes a hub body tube part 123 and a hub body bottom part 124. The hub body tube part 123 has a cylindrical shape centered on the central axis J1. The hub body bottom part 124 expands radially inward from the right end in the direction along the central axis J1 of the hub body tube part 123. A bottom part through hole 125 penetrating axially is formed in a radially central part of the hub body bottom part 124. The right hub shaft 11R penetrates the bottom part through hole 125. The hub body bottom part 124 is rotatably supported by the right hub shaft 11R via the hub bearing Br.

The case part 121 includes two hub flange parts 126 extending radially outward from the outer peripheral surface. The two hub flange parts 126 are arranged axially apart. The hub flange part 126 includes a spoke hole 127 into which the spoke Sp is inserted.

The hub body lid part 122 is fixed to an end part on the left L in the axial direction of the hub body tube part 123 of the case part 121. The hub body lid part 122 is arranged to axially face the hub body bottom part 124 of the case part 121. The hub body lid part 122 is fixed to the hub body tube part 123, thereby forming an internal space 120 of the hub body 12.

The internal space 120 accommodates the motor portion 20 and the speed reduction mechanism 30. That is, the stator 21 is arranged inside the hub body 12. The hub body lid part 122 is fixed to the hub body tube part 123 by, for example, screwing. However, the present invention is not limited to this, and it is also possible to adopt a fixing method such as press fitting, adhesion, or welding. In addition to these, it is possible to widely adopt a method of firmly fixing the hub body lid part 122 to the hub body tube part 123.

The hub body lid part 122 is rotatably supported by the left hub shaft 11L via the hub bearing Br.

The coil 23 of the motor portion 20 arranged inside the hub body 12 is connected to the lead wire 40 via the busbar 29. The coil 23 is supplied with a current via the lead wire 40. This excites the coil 23. Due to this, a magnetic force is generated between the excited coil 23 and the rotor magnet 28. By generating this magnetic force at a good timing, the rotor 25 rotates.

When the rotor 25 rotates, the rotor shaft 26 rotates. Rotation of the rotor shaft 26 rotates the sun gear portion 31. Rotation of the sun gear portion 31 is transmitted to the planetary gear portion 32, and is transmitted from the planetary gear portion 32 to the internal gear portion 33. Due to this, the internal gear portion 33 rotates. The internal gear portion 33 is connected to the hub body lid part 122 of the hub body 12 via the torque limiter 34. When the internal gear portion 33 rotates in the rotation direction Rt (see FIG. 8), the rotation of the internal gear portion 33 is transmitted to the hub body lid part 122. The hub body 12 rotates with respect to the hub shaft 11. Then, the rim Rm is rotated via the spoke Sp attached to the hub flange part 126 of the hub body 12, and a tire Ty attached to the rim Rm rolls on the ground, thereby driving the electric vehicle 100.

Thus, a configuration where the stator 21 and the rotor 25 are accommodated inside the hub 10 can simplify the structure as compared with a configuration including an electric drive unit that drives or assists the power transmission mechanism 103. The motor portion 20 is included inside the hub 10. This makes it possible to attach the hub 10 to the front fork Fk, and possible to enhance the versatility of the electric drive unit.

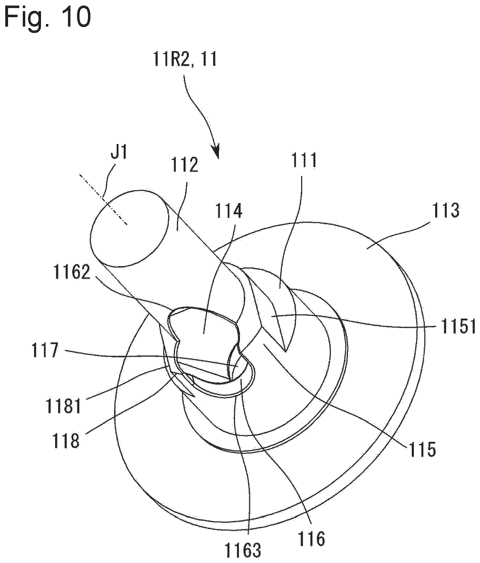

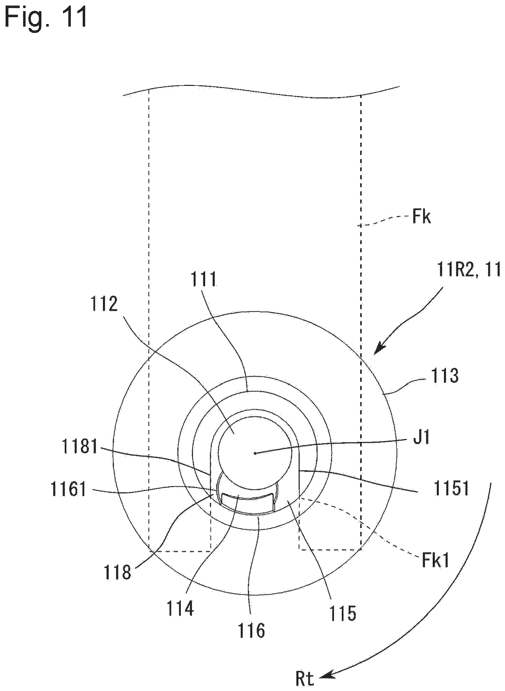

FIG. 10 is a perspective view of a right hub shaft 11R2 of the first variation viewed from the front lower side. FIG. 11 is a view of the right hub shaft 11R2 viewed from the right side in the direction along the central axis J1. The right hub shaft 11R2 of the present variation is different from the right hub shaft 11R illustrated in FIGS. 6, 8, and the like in including the first protrusion part 115 and a second protrusion part 118. The others have the same configuration as that of the right hub shaft 11R. Therefore, in the right hub shaft 11R2, substantially the same components as those of the right hub shaft 11R are denoted by the same reference signs, and a detailed description will be omitted.

The right hub shaft 11R2 includes the second protrusion part 118 arranged in front of the first opening part 116 in the rotation direction Rt of the wheel 102f. The circumferential width on the outer peripheral surface of the second protrusion part 118 is narrower than the circumferential width on the outer peripheral surface of the first protrusion part 115.

With such configuration, by making the circumferential width of the first protrusion part 115 wider than the circumferential width of the second protrusion part 118, it is possible to increase the rigidity of the right hub shaft 11R2 while securing the size of the first opening part 116. Since the lead wire 40 is held by the first protrusion part 115 and the second protrusion part 118, the lead wire 40 can be stably held.

The first protrusion part 115 includes a first plane 1151 on the rear side in the rotation direction Rt of the wheel 102f. The second protrusion part 118 includes a second plane 1181 on the front side in the rotation direction Rt of the wheel 102f. The first plane 1151 and the second plane 1181 may be parallel to each other.

When the right hub shaft 11R2 is attached to the hub attachment part Fk1 of the front fork Fk, the rotation of the right hub shaft 11R2 is suppressed. This can position the lead wire 40 at the hub attachment part Fk1. This can wire the lead wire 40 at an accurate position with respect to the front fork Fk.

The above-described embodiment assumes what is called a power assisted bicycle including the power transmission mechanism 103 other than the hub 10, but the present invention is not limited to this. For example, an electric vehicle using only the hub 10 as a power source may be assumed.

In the above-described embodiment, the hub using the motor portion 20 as a power source by supplying the coil 23 with a current from the power supply unit 104 has been described, but the present invention is not limited to this. For example, a hub including a power generation mechanism that rotates the rotor 25 by the rotation of the wheel 102f and generates power by the coil 23 can be formed with the same configuration as the hub having the above-described power source.

Various technical features disclosed in the present description can be variously modified without departing from the gist of the technical creation. Additionally, the plurality of embodiments and variations shown in the present description may be combined and implemented as far as possible.

The present invention can be used for an electric vehicle that obtains a driving force by electric power, such as a power assisted bicycle, an electric scooter, and an electric wheelchair. The present invention can also be used as a power generating hub used for a bicycle or the like.

### REFERENCE SIGNS LIST

- 100: electric vehicle
- 101: vehicle body
- 102: wheel
- 102f: front wheel
- 102r: rear wheel
- 103: power transmission mechanism
- 104: power supply unit
- 105: crank
- 105a: crankshaft
- 106: pedal
- 107: handlebar
- 108: saddle
- 10: hub
- 11: hub shaft
- 11L: left hub shaft
- 11R: right hub shaft
- 111: first shaft part
- 112: second shaft part
- 113: flange part
- 114: through hole
- 115: first protrusion part
- 1151: first plane
- 116: first opening part
- 117: second opening part
- 11R2: right hub shaft
- 118: second protrusion part
- 1181: second plane
- 12: hub body
- 120: internal space
- 121: case part
- 122: hub body lid part
- 123: hub body tube part
- 124: hub body bottom part
- 125: bottom part through hole
- 126: hub flange part
- 127: spoke hole
- 13: flange part
- 20: motor portion
- 21: stator
- 22: stator core
- 221: core back
- 222: teeth
- 23: coil
- 24: insulator
- 25: rotor
- 26: rotor shaft
- 261: shaft bearing
- 262: teeth
- 27: rotor core
- 28: rotor magnet
- 29: busbar
- 30: speed reduction mechanism
- 31: sun gear portion
- 32: planetary gear portion
- 320: planetary shaft
- 321: first planetary gear
- 322: second planetary gear
- 33: internal gear portion
- 34: torque limiter
- 341: torque limiter outer ring
- 342: torque limiter inner ring
- 40: lead wire
- 50: housing
- 51: first housing part
- 511: bottom part
- 52: second housing part
- 521: bottom part
- 522: through hole
- Fk: front fork
- Fk1: hub attachment part
- J1: central axis
- J2: planetary axis
- Nt: nut
- Rm: rim
- Rt: rotation direction
- Sp: spoke
- Ty: tire

## Claims

1. A hub arranged at a center of a wheel, the hub comprising:
a hub shaft extending along a central axis and protruding outward on an axial one side;
a hub body having a tubular shape rotatably arranged on the hub shaft and extending axially;
a stator including a coil formed by winding a conductive wire and arranged inside the hub body;
a rotor including a rotor shaft extending along the central axis, radially or axially facing the stator, and arranged rotatably with respect to the stator; and
a lead wire electrically connected to the conductive wire,
wherein
the rotor shaft is connected to the hub body,
the hub shaft has a through hole penetrating from an end part on an axial other side to an outer peripheral surface,
the through hole has a first opening part formed on the outer peripheral surface of the hub shaft, and the lead wire is arranged in the through hole, and
an end part on an axial one side of the first opening part and an end part on an axial other side of the first opening part have different circumferential positions with respect to the central axis.

2. The hub according to claim 1, wherein
the hub shaft includes
a first shaft part having a columnar shape extending along the central axis,
a second shaft part having a columnar shape protruding in a direction along the central axis from an end part on an axial one side of the first shaft part and having a smaller diameter than a diameter of the first shaft part, and
a first protrusion part axially protruding from the end part on the axial one side of the first shaft part and arranged radially outward of the second shaft, and
a part of the first opening part is formed on an outer peripheral surface of the first shaft part, an outer peripheral surface of the second shaft part, and an outer surface of the first protrusion part.

3. The hub according to claim 2, wherein the first protrusion part is arranged rearward the first opening part in a rotation direction of the wheel.

4. The hub according to claim 3 comprising a second protrusion part arranged in front of the first opening part in the rotation direction of the wheel,
wherein a circumferential width on an outer peripheral surface of the second protrusion part is narrower than a circumferential width on an outer peripheral surface of the first protrusion part.

5. The hub according to claim 4, wherein
the first protrusion part includes a first plane on a rear side in the rotation direction of the wheel,
the second protrusion part includes a second plane on a front side in the rotation direction of the wheel, and
the first plane and the second plane are parallel to each other.

6. The hub according to any one of claims 1 to 5, wherein
a part of the first opening part is formed at the end part on the axial one side of the first shaft part, and
a peripheral edge of a part of the first opening part formed in the first shaft part is curved outward.

7. The hub according to any one of claims 2 to 6, wherein
the through hole includes a second opening part opening to an axial other side of the hub shaft, and
the first opening part includes a part axially overlapping the second opening part as viewed from the direction along the central axis.

8. The hub according to claim 7, wherein the second opening part is arranged biasedly in a radial direction with respect to the central axis.

9. The hub according to any one of claims 2 to 8, wherein
the part of the first opening part is formed on the outer peripheral surface of the first shaft part, and
a length from the end part on the axial one side to the end part on the axial other side of the first opening part formed on the outer peripheral surface of the first shaft part is shorter than an axial length of the first protrusion part.

10. The hub according to any one of claims 1 to 9, wherein the coil is supplied with a current via the lead wire.

11. An electric vehicle comprising:
the hub according to claim 10; and
a power supply unit that supplies the coil with a current.
